# NEUE EUROPÄISCHE PATENTSCHRIFT

(11) **EP 0 544 129 B2**
(45) Veröffentlichungstag und Bekanntmachung des Hinweises auf die Entscheidung über den Einspruch: **01.03.2000**
(45) Hinweis auf die Patenterteilung: 25.01.1995
(21) Anmeldenummer: 92118923.9
(22) Anmeldetag: 05.11.1992
(51) Int. Cl.: B23D 51/10

(54) **Spanneinrichtung für eine Stichsägemaschine**
Holder for a sabre saw
Dispositif de serrage pour une scie sauteuse

(30) Priorität: 27.11.1991 DE 4138986
(43) Veröffentlichungstag der Anmeldung: 02.06.1993
(73) Patentinhaber: ATLAS COPCO ELEKTROWERKZEUGE GmbH, 71364 Winnenden (DE)
(72) Erfinder: Langhoff, Boris, W-7150 Backnang (DE)
(74) Vertreter: Gaiser, Hartmut, Dipl.-Ing.

(56) Entgegenhaltungen:
- EP-B- 0 404 764
- DE-A- 3 006 299
- DE-A- 3 245 359
- DE-A- 3 247 178
- DE-A- 4 102 011
- FR-A- 2 154 109
- GB-A- 907 520
- US-A- 3 750 283
- US-A- 3 823 473
- US-A- 4 285 129
- US-A- 4 299 402
- US-A- 4 324 512

## Beschreibung

Die Erfindung betrifft eine Spanneinrichtung für das Sägeblatt einer handgeführten Stichsägemaschine nach dem Oberbegriff des Patentanspruchs 1.

Eine derartige Spanneinrichtung ist in der EP 0 404 764B1 beschrieben. Der Endbereich des Sägeblatts ist in der Zentrierhülse mit seitlichem Spiel geführt, was eine präzise Einspannung des Sägeblatts beeinträchtigt. Das zum Wechsel des Sägeblatts zu bedienende Stellglied macht die Bewegung des Sägeblatts nicht mit.

Aus der DE 32 47 178 A1 ist eine Befestigungsvorrichtung für ein Stichsägeblatt bekannt. Das Stichsägeblatt soll in miteinander in fester Verbindung stehende prismatische Vertiefungen mittels einer Spannhülse gedrückt werden. Beides gleichzeitig ist praktisch aufgrund von Toleranzen nicht zu erreichen, so daß auch hier in der Einspannung Spiel besteht. Die Spannhülse(7) macht die Bewegung des Sägeblatts mit, was bei der Handhabung der Stichsäge wenig komfortabel ist.

Eine weitere Spanneinrichtung ist in der DE 32 45 359 A1 beschrieben. Dort ist die Einspannweise für die Sägeblätter unbefriedigend und kann zu unpräzisen Schnitten führen; dies insbesondere bei unterschiedlichen Sägeblattdicken. Es ist zwar eine Blattfeder zum Andrücken des Sägeblatts vorgesehen. Diese kann jedoch bei größeren Belastungen und unterschiedlichen Sägeblattdicken nicht eine starre mittige Führung der Sägeblätter gewährleisten. Als Stellglied zum Lösen des Sägeblatts ist ein Schieber in einem Schlitz des Gehäuses gelagert. Zum Lösen des Sägeblatts muß die Stellung gesucht werden, in der der Schieber das Sägeblatt aus der Zentrierhülse lösen kann. Außerdem kann die Klemmstelle des Sägeblatts nicht selbsttätig erreicht werden. Hierfür ist vielmehr wiederum eine Betätigung des Schiebers nötig.

In der US-PS 3 823 473 sind Spanneinrichtungen für Sägeblätter von Stichsägen beschrieben. Diese sind jedoch für andere als die genannten Sägeblätter vorgesehen, nämlich für solche Sägeblätter, die an Löchern geführt werden. Auch dort ist bei unterschiedlich dicken Sägeblättern kein formschlüssig exakter Sitz gewährleistet.

In der DE 30 06 299 A1 ist eine Spanneinrichtung für eine Stichsäge beschrieben, bei der das Sägeblattende mittels eines von außen zugänglichen Stellgliedes an dem Stößel anspannbar bzw. freigebbar ist. Hierdurch ist das Sägeblatt zwar rasch und ohne Hilfswerkzeug auswechselbar. Es kann jedoch bei unterschiedlichen Dicken des Sägeblatts zwischen der Längsachse des Stößels und der Längsachse des Sägeblatts ein Versatz auftreten, der sich auf die Präzision des Sägeschnitts ungünstig auswirkt.

In der nicht vorveröffentlichten DE 41 02 011 A1 ist eine Spanneinrichtung für eine Stichsäge angegeben. Bei dieser ist die Präzision des Sägeschnitts durch eine Zentrierhülse verbessert, in der das Einspannende des Sägeblatts mittels einer Spannhülse festklemmbar ist. Das Stellglied ist mit der Spannhülse axial fest und ihr gegenüber drehbar. Das Stellglied macht dabei den Sägehub und gegebenenfalls - bei einer Pendelstichsäge - auch die Pendelbewegung mit. Dies ist für die Handhabung der Stichsäge unerwünscht und beinhaltet eine gewisse Verletzungsgefahr.

In der Zentrierhülse nach der DE 41 02 011 A1 ist ein einteiliger, federbelasteter Zentrierbolzen gelagert, der den Endbereich des Einspannendes des Sägeblattes abstützt. Zwischen dem Zentrierbolzen und der Zentrierhülse besteht zwangsläufig ein Spiel. Dies führt zu unerwünschten Seitenbewegungen des Sägeblatts. Solche Seitenbewegungen mindern die Präzision des Sägeschnitts.

Aufgabe der Erfindung ist es, eine Spanneinrichtung der eingangs genannten Art vorzuschlagen, die die Handhabung der Stichsäge verbessert, wobei insbesondere das Stellglied die Bewegung des Sägeblatts trotz präziser Einspannung des Sägeblatts nicht mitmacht.

Erfindungsgemäß ist obige Aufgabe bei einer Spanneinrichtung der eingangs genannten Art durch die kennzeichnenden Merkmale des Patentanspruchs 1 gelöst.

Die Erfindung hat den Vorteil, daß die Sägeblätter auch bei unterschiedlichen Dicken formschlüssig mittig geführt sind und der Endbereich des jeweiligen Sägeblatts Zwischen den Zentrierbacken festgespannt ist. Dies verbessert die Schnittpräzision der Stichsägemaschine erheblich.

Bei der Erfindung ist auch vermieden, daß das Stellglied, also weder die Schalthülse noch ihr Griffglied, die Bewegung des Sägeblatts mitmacht. Die Schalthülse ist im Sägebetrieb gegenüber der Spannhülse frei und steht still. Dies vermindert eine Verletzungsgefahr und verbessert die Handhabbarkeit der Stichsäge und auch die Bedienbarkeit des Stellgliedes beim Einsetzen bzw. Wechseln des Sägeblatts.

Bei einer Pendel-Stichsägemaschine besteht eine Weiterbildung der Erfindung darin, daß die Schalthülse einen Innenwandungsbereich aufweist, der der Spannhülse nähersteht als die Wandung im übrigen und dieser Innenwandungsbereich beim Betätigen der Schalthülse die pendelbare Spannhülse an einen Endpunkt des Pendelanschlags drückt. Dadurch ist erreicht, daß die Zentrierhülse und die Spannhülse zum Einsetzen eines Sägeblatts in eine definierte Stellung des Pendelhubs gebracht werden, in der das Sägeblatt leicht eingesetzt werden kann.

Weitere vorteilhafte Ausgestaltungen der Erfindung ergeben sich aus den Unteransprüchen und der folgenden Beschreibung von Ausführungsbeispielen. In der Zeichnung zeigen:
Figur 1 eine Ansicht einer Stichsägemaschine im Bereich der Spanneinrichtung geschnitten,
Figur 2 einen gegenüber Figur 1 vergrößerten Längsschnitt der Spanneinrichtung,
Figur 3 einen Längsschnitt längs der Linie III-III nach Figur 2,
Figur 4 einen Querschnitt längs der Linie IV-IV nach Figur 2 in unbetätigter Stellung der Schalthülse,
Figur 5 einen Querschnitt entsprechend Figur 4 in betätigter Stellung der Schalthülse,
Figur 6 einen Längsschnitt eines weiteren Ausführungsbeispiels,
Figur 7 eine Ansicht längs der Linie VII-VII nach Figur 6,
Figur 8 einen Längsschnitt eines weiteren Ausführungsbeispiels,
Figur 9 einen Teilschnitt längs der Linie IX-IX nach Figur 8,
Figur 10 einen Längsschnitt eines weiteren Ausführungsbeispiels und
Figur 11 einen Schnitt längs der Linie XI-XI nach Figur 10.

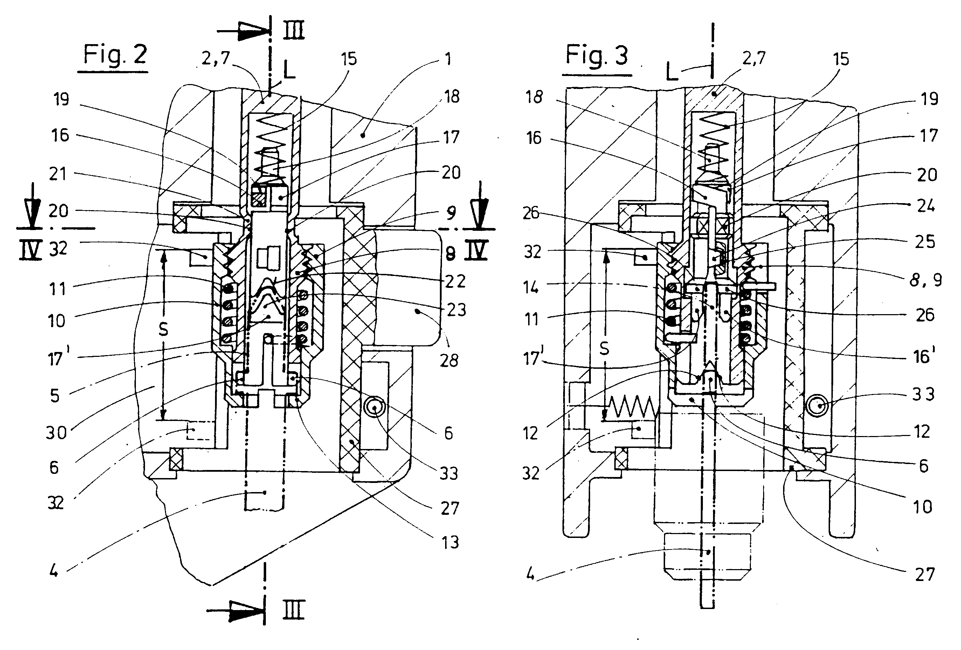

Eine handgeführte Stichsägemaschine weist ein Gehäuse(1) auf. In diesem ist ein motorisch angetriebener Stößel(2) gelagert. An dem Stößel(2) ist eine Spanneinrichtung(3) angeordnet, die mit dem Stößel(2) im Sägehub(S), gegebenenfalls auch zusätzlich pendelnd, angetrieben wird. An der Spanneinrichtung(3) ist ein Sägeblatt(4) mit seinem Einspannende(5) festlegbar. Am Einspannende(5) sind zwei Nasen(6) ausgebildet. In den Figuren 2 und 3 ist das Sägeblatt(4) strich-doppelpunktiert gezeigt.

Für die Aufnahme des Einspannendes(5) ist an dem Stößel(2) eine Zentrierhülse(7) angeordnet oder an diesem selbst ausgebildet. Die Zentrierhülse(7) weist ein Außengewinde(8) auf, an dem mittels eines Innengewindes (9) eine Spannhülse(10) gelagert ist. Die Gewinde(8,9) bilden eine Schrägfläche, mittels der die Spannhülse(10) in Richtung der Längsachse(L) axial gegenüber der Zentrierhülse(7) beweglich ist. Zwischen der Zentrierhülse(7) und der Spannhülse(10) ist eine Drehfeder(11) angeordnet.

Die Zentrierhülse(7) ist an ihrem unteren Ende mit keilförmigen Schrägflächen(12) zur Führung der Nasen(6) versehen (vgl.Fig.3). Die Spannhülse(10) weist einen unteren Rand(13) auf, der beim Festklemmen des Sägeblatts(4) die Nasen(6) gegen die Schrägflächen(12) drückt.

Um auch den oberen Endbereich(14) des Sägeblatts(4) sicher abzustützen, ist in der Zentrierhülse(7) ein mittels einer Druckfeder(15) belasteter Zentrierbolzen gelagert, der von zwei Zentrierbacken(16,17) gebildet ist, an denen ein von der Druckfeder(15) belastetes Einlegeteil(18) anliegt. Das Einlegeteil(18) drückt dabei auf eine Schräge(19) jedes der Zentrierbacken(16,17), wobei die Zentrierbacken(16,17) nach außen gedrückt werden. Die Zentrierbacken(16,17) weisen Führungsflächen (20) auf, die an Abplattungen(21) der Zentrierhülse(7) anliegen. Die Zentrierbacken(16,17) sind dadurch in der Zentrierhülse(7) um die Längsachse(L) unverdrehbar gelagert. Durch die auf die Schrägen(19) über das Einlegeteil(18) wirkende Druckfeder(15) sind die Führungsflächen(20) in der Zentrierhülse(7) spielfrei geführt.

Zur Abstützung des Endbereichs(14) sind an den beiden Zentrierbacken(16,17) weitere Schrägflächen(22) vorgesehen, die auch unterschiedlich dicke Sägeblätter zwischen sich aufnehmen können. Keilförmige Ausnehmungen(23) (vgl. Figur 2) der Zentrierbacken(16,17) dienen ebenfalls der Aufnahme des Endbereichs(14) des Einspannendes(5).

Um die beiden Zentrierbacken(16,17) axial gegeneinander zu sichern, greift jeweils die eine Zentrierbacke(16,17) mittels eines Höckers(24) in eine Ausnehmung(25) der anderen Zentrierbacke(17,16). Bunde(26) der Zentrierbacken(16,17) begrenzen deren Axialbewegung. Ansätze(16',17') unterstützen die Führung der Zentrierbacken (16,17) in der Zentrierhülse(7) und das Einstecken des Endbereichs(14) des Sägeblatts(4) zwischen die Zentrierbacken(16,17).

In dem Gehäuse(1) ist als Stellglied für die Spannhülse(10) eine Schalthülse(27) drehbar gelagert.

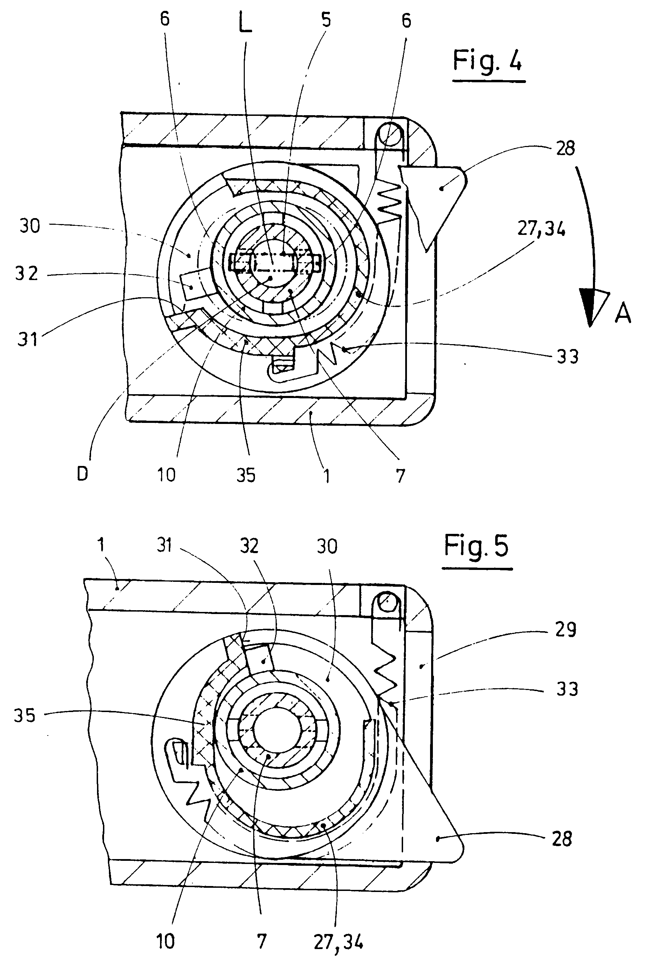

Deren Drehachse(D) liegt leicht exzentrisch zur Längsachse(L), parallel zu dieser (vgl. Figur 4). An der Schalthülse(27) ist ein Griffglied(28) ausgebildet, das durch eine Durchbrechung(29) an der Stirnseite des Gehäuses(1) ragt.

Die Schalthülse(27) weist eine Aussparung(30) auf, deren eine Seitenwand einen Anschlagrand(31) bildet. Dieser Anschlagrand(31) erstreckt sich parallel zur Längsachse(L) über eine Strecke, die länger als der Sägehub(S) ist. Dem Anschlagrand(31) steht ein Betätigungsnocken(32) der Spannhülse(10) gegenüber.

An der Schalthülse(27) greift eine Zugfeder(33) an. Die Wandung(34) der Schalthülse(27) ist oval geformt, so daß sich innerhalb der Schalthülse(27) die Spannhülse(10) frei bewegen kann, auch wenn sie zusätzlich zum Sägehub eine Pendelbewegung ausführt. Dies ist in Figur 4 strichdoppelpunktiert angedeutet. Ein Innenwandungsbereich(35) der Wandung(34) steht der Spannhülse(10) näher als die Wandung(34) im Bereich des Pendelhubs.

Die Arbeitsweise der beschriebenen Einrichtung ist etwa folgende:
In den Figuren 2 und 3 ist die Spannhülse(10) in ihrer Klemmstellung gezeigt. In dieser Stellung ist sie mittels der Drehfeder(11) am Gewinde(8,9) so nach oben geschraubt, daß ihr Rand(13) die Nasen(6) des Sägeblatts(4) nach oben gegen die Schrägflächen(12) drückt. Damit ist das Sägeblatt(4) unabhängig von seiner Dicke sicher festgeklemmt. Der Endbereich(14) des Sägeblatts(4) ist von den Zentrierbacken(16,17) radial spielfrei gehalten, die ihrerseits radial spielfrei in der Zentrierhülse(7) geführt sind. Der Endbereich(14) des Sägeblatts(4) kann somit auch bei Querbelastung des Sägeblatts(4) beim Schnitt nicht ausweichen. Dies verbessert die Schnittpräzision. Während des Sägebetriebs steht die Schalthülse(27) in ihrer unbetätigten Stellung (vgl. Figur 4). In dieser Stellung berührt die Spannhülse(10) bzw. ihr Betätigungsnocken(32) die Schalthülse(27) weder beim in Richtung der Längsachse(L) erfolgenden Sägehub noch bei einem zusätzlichen Pendelhub. Die Schalthülse(27) ist in dieser Stellung von der Zugfeder(33) gehalten, wobei das Griffglied(28) an einem Rand der Durchbrechung(29) anschlägt.

Soll das Sägeblatt(4) ausgewechselt werden, dann wird das Griffglied(28) in Richtung des Pfeiles(A) (vgl. Figur 4) verschwenkt. Dabei dreht sich die Schalthülse(27) gegen die Kraft der Zugfeder(33) um die Drehachse(D). Bei dieser Drehbewegung trifft der Anschlagrand(31), unabhängig davon, in welcher Stellung des Sägehubs(S) der Betätigungsnocken(32) steht, auf den Betätigungsnocken (32) und dreht dadurch die Spannhülse(10) gegen die Kraft der Drehfeder(11) in ihre Freigabestellung, wie dies in Figur 5 dargestellt ist. Bei der Drehung der Schalthülse(27) trifft deren Innenwandungsteil(35) an der der Durchbrechung(29) abgewandten Seite auf den Umfang der Spannhülse(10), so daß diese zwangsweise an den vorderen - der Durchbrechung(29) nahen - Endpunkt des Pendelausschlags bewegt wird.

In der Freigabestellung der Spannhülse(10) hat sich der Rand(13) von den Nasen(6) des Sägeblatts(4) entfernt, so daß sich nun das Sägeblatt(4) einfach herausziehen läßt. Wird das Griffglied(28) losgelassen, dann geht es und mit ihm die Schalthülse(27) in die in Figur 4 gezeigte Stellung zurück. Unter der Wirkung der Drehfeder(11) geht die Spannhülse(10) und mit ihr der Betätigungsnocken(32) von selbst in die in Figur 4 gezeigte Stellung zurück.

Soll erneut ein Sägeblatt(4) eingesetzt werden, dann wird mittels des Griffgliedes(28) die Schalthülse(27) wieder gedreht, so daß die Spannhülse(10) wieder in ihre Freigabestellung kommt. Es läßt sich dann das Sägeblatt (4) in die Zentrierhülse(7) einstecken. Sein Endbereich (14) gelangt dabei zwischen die Zentrierbacken(16,17) und seine Nasen(6) finden einen Anschlag an den Schrägflächen(12). Danach wird dann das Griffglied(28) losgelassen, so daß sich der Anschlagrand(31) der Schalthülse(27) unter der Wirkung der Zugfeder(33) von den Betätigungsnocken(32) entfernt. Die Schalthülse(27) dreht sich unter der Wirkung der Drehfeder(11) mit ihrem Rand(13) unter die Nasen(6) und klemmt diese axial gegen die Schrägflächen(12). Damit ist die Sägemaschine wieder betriebsbereit. Die Dicke des Sägeblatts(4) bestimmt die Drehwinkellage des Betätigungsnockens(32) von dem Anschlagrand(31) innerhalb der Aussparung(30).

Es ist auch möglich, die Zentrierbacken(16,17) gemeinsam einstückig auszubilden. Die Verbindung der Zentrierbacken (16,17) ist dann federnd mit nach außen gerichteter Vorspannung.

Das jeweilige Sägeblatt(4) ist unabhängig von seiner Dicke an seinen Nasen(6) mittig zwischen den Schrägflächen(12) fixiert. Am oberen Endbereich(14) des Einspannendes(5) ist das Sägeblatt(4) zusätzlich durch die federbelasteten Zentrierbacken(16,17) bzw. deren Schrägflächen(22) gehalten. Es ist dabei auch um die Längsachse(L) unverdrehbar spielfrei gehalten.

Für die Fixierung des Sägeblatts(4) ist es auch günstig, daß die Haltekraft der Drehfeder(11) durch Reibwiderstände unterstützt ist. Die Drehfeder(11) muß also nur ein vergleichsweise geringes Drehmoment aufbringen, um die gewünschte Klemmung des Sägeblatts(4) zu erreichen.

Günstig ist auch, daß die Schalthülse in jeder Hublage des Sägeblatts betätigt werden kann, ohne daß eine Verletzungsgefahr für den Benutzer besteht und ohne weiteres in eine sichere Ausgangslage zurückkehrt. Im Prinzip kann das Sägeblatt(4) auch freigegeben werden, solange sich der Stößel(2) noch bewegt.

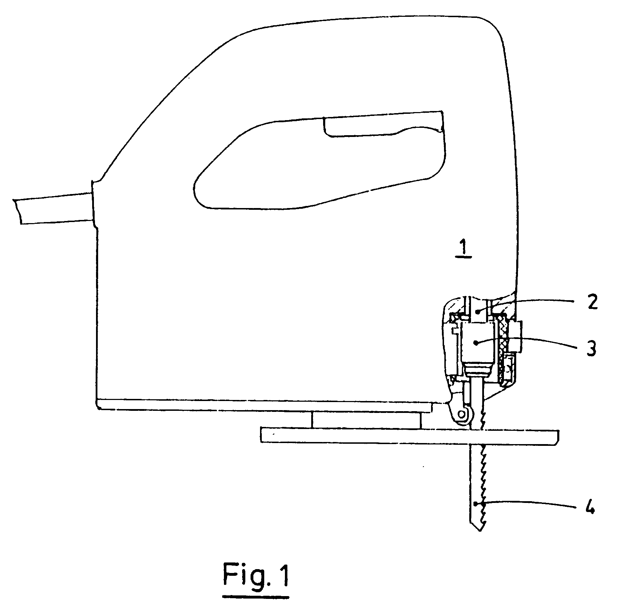

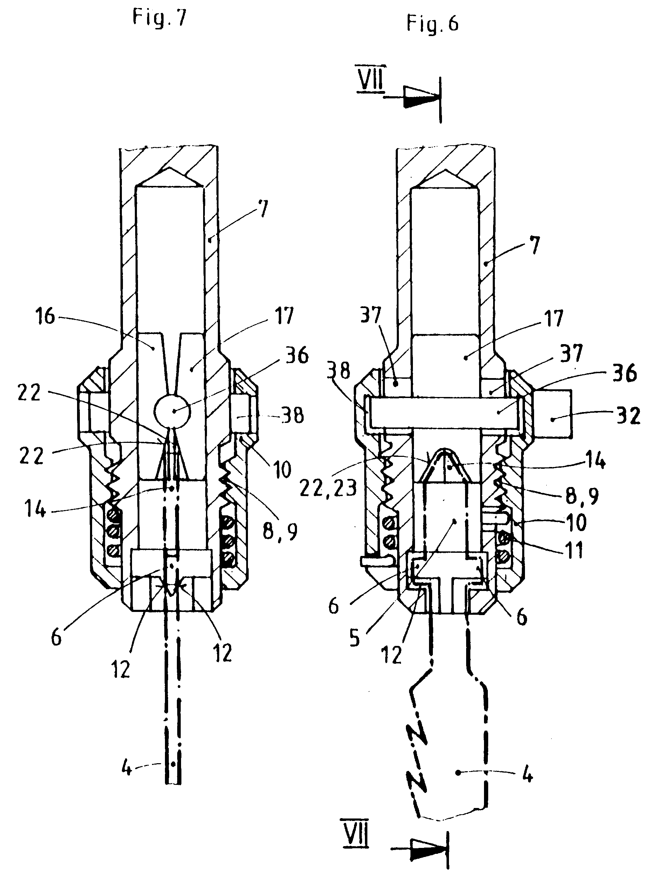

Beim Ausführungsbeispiel nach Figur 6 und 7 ist die Schalthülse nicht gezeigt. Ähnlich wie beim Ausführungsbeispiel nach den Figuren 1 bis 4 greift der Betätigungsnocken(32) der Spannhülse(10) in eine Aussparung der Schalthülse. Den Figuren 1 bis 4 entsprechende Teile sind mit gleichen Bezugszeichen versehen.

Die Zentrierbacken(16,17) sind an einem Zapfen(36) gelagert und in der Zentrierhülse(7) unverdrehbar geführt. Der Zapfen(36) greift beidendig durch Öffnungen(37) der Zentrierhülse(7) in einen Ringkanal(38) der Spannhülse(10). Jeder Zentrierbacken(16,17) weist eine Schrägfläche(22) auf, die zur Aufnahme des Endbereichs(14) des Einspannendes(5) des Sägeblatts(4) keilförmig verläuft. Die Zentrierbacken(16,17) können somit auch unterschiedlich dicke (vgl. Fig. 7) Sägeblätter zwischen sich halten. Keilförmig verlaufende Schrägflächen(12) zur Stützung der Nasen(6) des Sägeblatts(4) sind unten an der Zentrierhülse(7) ausgebildet.

Die Funktionsweise des Ausführungsbeispiels nach den Figuren 6, 7 ist im wesentlichen folgende:
Im Betrieb ist das Sägeblatt(4) unabhängig von seiner Dicke zentriert, spielfrei formschlüssig und um die Längsachse(L) unverdrehbar fest eingespannt. Im gespannten Zustand ist unter der Wirkung der Drehfeder(11) die Spannhülse(10) längs der Gewinde(8,9) gegenüber der Zentrierhülse(7) gedreht. Dabei drückt der obere Rand des Ringkanals(38) den Zapfen(36) nach unten und dieser drückt in Längsrichtung(L) die Zentrierbacken (16,17) mit ihren Schrägflächen(22) auf das Einspannende(5), das dabei in den keilförmigen Ausnehmungen(23) der Zentrierbacken(16,17) liegt. Die Nasen(6) sind dadurch zwischen die keilförmigen Schrägflächen(12) der Zentrierhülse(7) gedrückt. In Gegenwirkung zur auf das Einspannende(5) wirkenden Anspannkraft legen sich die beiden Zentrierbacken(16,17) spielfrei innen an der Zentrierhülse(7) an.

Soll das Sägeblatt(4) gewechselt werden, dann wird, wie beim Ausführungsbeispiel nach den Figuren 1 bis 4 beschrieben, die Spannhülse(10) gegenüber der Zentrierhülse(7) gedreht. Sie wandert dann längs der Gewinde(8,9) gegen die Wirkung der Drehfeder(11) in Längsrichtung(L) hoch und nimmt mit dem unteren Rand ihres Ringkanals(38) den Zapfen(36) mit, der dabei die Zentrierbacken(16,17) vom Endbereich(14) des Einspannendes(5) abzieht. Das Sägeblatt(4) läßt sich nun von den Schrägflächen(12) und nach Drehen um etwa 90^{o} aus der Zentrierhülse(7) entnehmen. Es läßt sich dann ein anderes Sägeblatt einsetzen, das, unabhängig davon, ob es dicker oder dünner ist, wieder in der beschriebenen Weise unter der Wirkung der Drehfeder(11) formschlüssig, zentriert, spielfrei festgespannt wird.

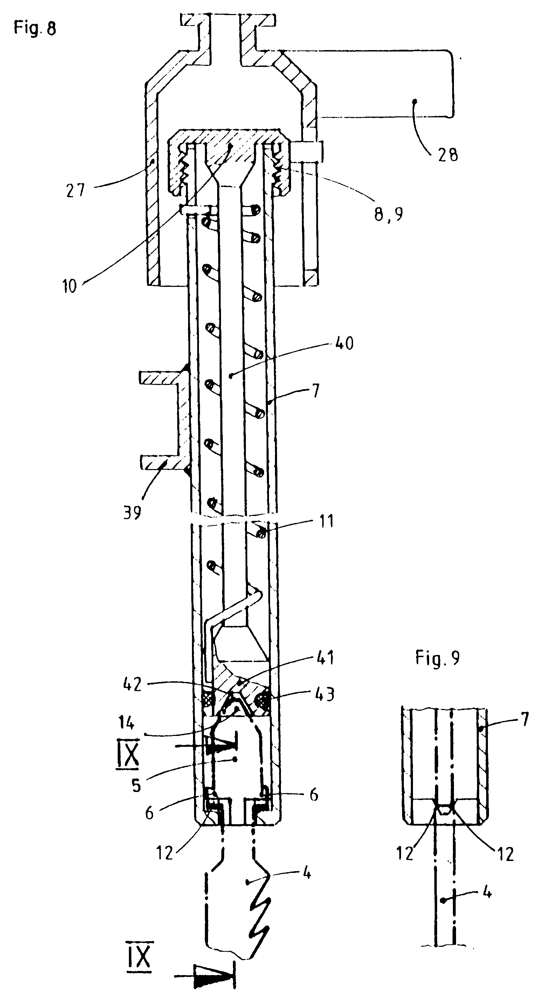

Beim Ausführungsbeispiel nach den Figuren 1 bis 7 liegt das Griffglied(28) am Gehäuse(1) vergleichsweise nahe beim Sägeblatt(4) (vgl. Fig. 1). Beim Ausführungsbeispiel nach den Figuren 8, 9 ist dagegen vorgesehen, daß die Schalthülse(27) und ihr Griffglied(28) weiter von dem Sägeblatt(4) entfernt am Gehäuse(1) angeordnet sind. Die Zentrierhülse(7) erstreckt sich im Gehäuse(1) weit nach oben. Für den Antrieb durch den Stößel(2) ist außen an der Zentrierhülse(7) ein Ansatz(39) befestigt.

Die Spannhülse(10) ist am oberen Ende der Zentrierhülse(7) mittels der Gewinde(8,9) gelagert. Eine Verlängerung(40) der Spannhülse(10) erstreckt sich in der Zentrierhülse(7) nach unten und weist einen Aufnahmekopf(41) für den keilförmigen Endbereich(14) des Einspannendes(5) des Sägeblatts(4) auf. Am Aufnahmekopf(41) ist eine trichterförmige, konische, der Keilform des Endbereichs(14) angepaßte Vertiefung(42) ausgebildet.

Der Aufnahmekopf(41) ist mit einem Dichtring(43) in der Zentrierhülse(7) abgestützt. Die Zentrierhülse(7) weist die keilförmigen Schrägflächen(12) zur Abstützung der Nasen(6) auf. Die Drehfeder(11) greift einerseits an dem Aufnahmekopf(41) und andererseits an der Zentrierhülse(7) an.

Im Betrieb ist die Vertiefung(42) des Aufnahmekopfes(41) unter der Wirkung der Drehfeder(11) und der Gewinde(8,9) auf das Einspannende(5) gedrückt. Dieses ist dabei formschlüssig festgelegt. Dadurch sind auch die Nasen(6) zwischen die Schrägflächen(12) gedrückt.

Zum Auswechseln des Sägeblatts(4) wird die Schalthülse(27) gedreht, wobei sie die Spannhülse(10) mitnimmt. Der Aufnahmekopf(41) entfernt sich dadurch vom Einspannende(5), so daß das Sägeblatt(4) wie beschrieben auswechselbar ist.

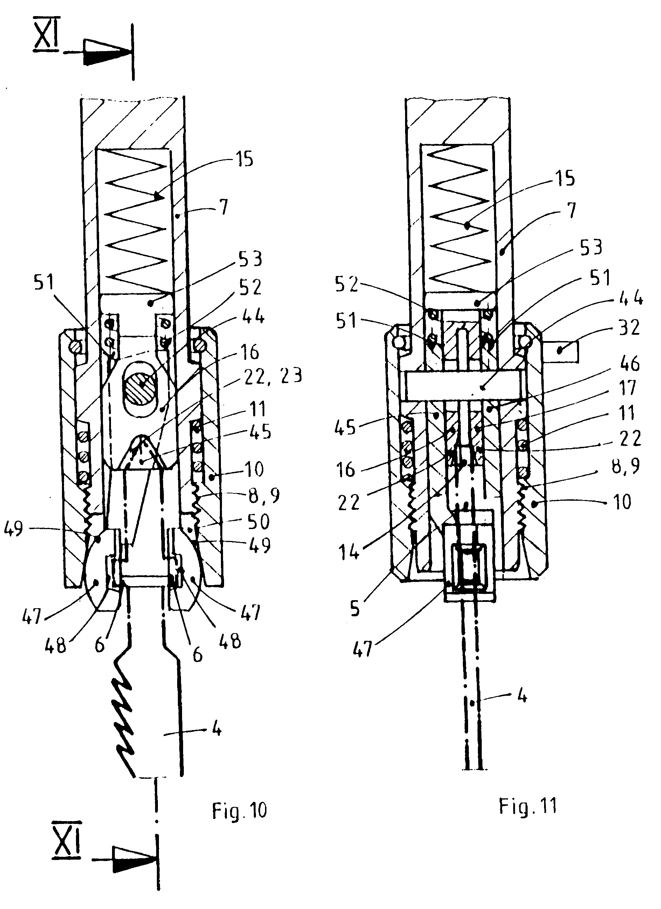

Beim Ausführungsbeispiel nach den Figuren 10, 11 sind wieder die den oben beschriebenen Teilen entsprechende Teile mit gleichen Bezugszeichen versehen. Die in der Zentrierhülse(7) angeordnete Druckfeder(15) drückt auf den Zentrierbolzen, der die beiden Zentrierbacken(16,17) bildet, welche die Schrägflächen(22) zum Einspannen des oberen Endbereichs(14) des Einspannendes(5) aufweisen.

An der Zentrierhülse(7) ist ein Querstift(44) angeordnet, an dem zwei Arme(45,46) schwenkbar gelagert sind. Jeder Arm(45,46) weist an seinem dem Querstift(44) abgewandten Ende einen Spannbacken(47) für jeweils eine der Nasen(6) des Sägeblatts(4) auf. Die Spannbacken(47) haben innenseitig eine Aufnahme(48) für die Nasen(6) und sind außenseitig mit einer Wölbung(49) versehen. Den Wölbungen(49) ist ein Innenkonus(50) der Spannhülse(10) zugeordnet.

Am den Spannbacken(47) abgewandten Ende der Arme(45,46) sind Schrägen(51) vorgesehen, auf die eine Druckfeder(52) drückt, die sich an einem Bund(53) des Zentrierbolzens abstützt.

Die Funktionsweise des Ausführungsbeispiels nach den Figuren 10, 11 ist im wesentliche folgende:
In der Einspannstellung (vgl. Fig.10, 11) drückt der Innenkonus(50) die Aufnahmen(48) der Spannbacken(47) über die Nasen(6), die dadurch spielfrei gehalten sind. Die Druckfeder(15) drückt, wie beschrieben, die Schrägflächen (22) der Zentrierbacken(16,17) an den Endbereich(14) des Einspannendes(5). Das Sägeblatt(4) ist dadurch in der gewünschten Weise spielfrei und unverdrehbar festgespannt.

Zum Wechseln des Sägeblatts(4) wird die Spannhülse(10) gegen die Kraft der Feder(11) nach oben bewegt. Der Innenkonus(50) gibt dabei die Spannbacken(47) frei. Durch die auf die Schrägen(51) wirkende Druckfeder(52) schwenken jetzt die Arme(45,46) nach außen, so daß sich die Spannbacken(47) von selbst von den Nasen(6) entfernen. Das Sägeblatt(4) kann jetzt - ohne Verdrehen - entnommen bzw. ausgetauscht werden. Im übrigen wird auf die obigen Erläuterungen verwiesen.

Im Rahmen der Erfindung liegen weitere Ausführungsbeispiele, die sich durch Kombination der bei den beschriebenen Ausführungsbeispielen genannten Teilmerkmale ergeben. Beispielsweise muß die Feder(11) keine Drehfeder sein. Sie kann eine Druckfeder sein. Die Spannhülse bzw. Schalthülse sind dann manuell in die Einspannstellung zu bringen.

## Patentansprüche

1. Spanneinrichtung für das Sägeblatt(4) einer handgeführten Stichsägemaschine, das von einem im Gehäuse der Stichsägemaschine im Sägehub angetriebenen Stößel(2) parallel zu seiner Längsachse(L) bewegbar ist und das an seinem Einspannende(5) zwei Nasen(6) aufweist, mit einer Zentrierhülse(7), in die das Einspannende(5) einsteckbar ist, und mit einem Stellglied zum Lösen des Sägeblatts (4), wobei eine um die Längsachse(L) verdrehbar gelagerte Spannhülse(10) vorgesehen ist, die mittels einer Schrägfläche(8,9) und einer Feder(11) eine die Nasen des Einspannendes(5) in der Zentrierhülse(7) festklemmende Axialbewegung ausführt, und mittels des Stellgliedes die Spannhülse(10) aus der Klemmstellung gegen die Kraft der Feder (11) in die Freigabestellung drehbar ist, und das Stellglied von einer im Gehäuse(1) etwa um die Längsachse(L) schwenkbar, axial unverschieblich gelagerten Schalthülse (27) gebildet ist, und die Schalthülse(27) mit einem Griffglied(28) eine Durchbrechung(29) des Gehäuses(1) überragt und die Schalthülse(27) einen Anschlagrand(31) bildet, der in axialer Richtung mindestens so lang wie der Sägehub(S) ist, wobei der Anschlagrand(31) einem Betätigungsnocken(32) der Spannhülse(10) gegenübersteht und bei Betätigung des Griffgliedes(28) die Spannhülse (10) aus ihrer Klemmstellung in die Freigabestellung dreht,
dadurch gekennzeichnet,
daß in der Zentrierhülse(7) Zentrierbacken(16,17) geführt sind, die mittels Schrägflächen(22) beidseitig den Endbereich(14) des Einspannendes(5) des Sägeblatts(4) klemmen.

2. Spanneinrichtung nach Anspruch 1, dadurch gekennzeichnet, daß die Drehachse(D) der Schalthülse(27) parallel zur Längsachse(L) liegt.

3. Spanneinrichtung nach Anspruch 1 oder 2, dadurch gekennzeichnet, daß an der Schalthülse-(7) eine Rückstellfeder(33) angreift.

4. Spanneinrichtung nach Anspruch 3, dadurch gekennzeichnet, daß die Rückstellfeder(33) die Schalthülse(27) in eine Ruhestellung bringt, in der ihr Anschlagrand(31) von dem Betätigungsnocken(32) beabstandet ist.

5. Spanneinrichtung nach einem der vorhergehenden Ansprüche, insbesondere bei einer Pendel-Stichsäge, dadurch gekennzeichnet, daß die Schalthülse(27) einen Innenwandungsbereich(35) aufweist, der der Spannhülse(10) nähersteht als die Wandung im übrigen, und daß der Innenwandungsbereich(35) beim Betätigen der Schalthülse (27) die pendelbare Spannhülse-(10) an einen Endpunkt des Pendelausschlags drückt.

6. Spanneinrichtung nach Anspruch 5, dadurch gekennzeichnet, daß die Wandung der Schalthülse(27) im Querschnitt oval ist.

7. Spanneinrichtung nach einem der vorhergehenden Ansprüche 2 bis 6, dadurch gekennzeichnet, daß die Drehachse(D) zwischen der Längsachse(L) und dem Innenwandungsbereich(35) liegt.

8. Spanneinrichtung nach einem der vorhergehenden Ansprüche,
dadurch gekennzeichnet,
daß die zwei Zentrierbacken(16,17) von einer Feder(15) spielfrei an die Zentrierhülse(7) angedrückt sind.

9. Spanneinrichtung nach Anspruch 8, dadurch gekennzeichnet, daß die Zentrierbacken(16,17) in der Zentrierhülse(7) um die Längsachse(L) unverdrehbar geführt sind.

10. Spanneinrichtung nach Anspruch 8, dadurch gekennzeichnet, daß die Zentrierbacken(16,17) aus einem Stück bestehen, wobei die Verbindung federnd ist und die Zentrierbacken(16,17) mit Vorspannung nach außen eingebaut sind.

11. Spanneinrichtung nach einem der vorhergehenden Ansprüche, dadurch gekennzeichnet, daß die zwischen der Spannhülse(10) und der Zentrierhülse(7) wirkende Feder eine Drehfeder(11) ist.

12. Spanneinrichtung nach einem der vorhergehenden Ansprüche, dadurch gekennzeichnet, daß die Spannhülse(10) bei ihrer Bewegung zwei Zentrierbacken(16,17) für den Endbereich(14) des Einspannendes(5) axial mitnimmt.

13. Spanneinrichtung nach einem der vorhergehenden Ansprüche, dadurch gekennzeichnet, daß die Spannhülse(10) einen Aufnahmekopf(41) mit einer trichterförmigen Vertiefung(42) für die Aufnahme des keilförmigen Endbereichs(14) des Einspannendes(5) aufweist.

14. Spanneinrichtung nach einem der vorhergehenden Ansprüche, dadurch gekennzeichnet, daß in der Zentrierhülse(7) Spannbacken(47) aufweisende Arme(45,46) schwenkbar gelagert sind und daß die Spannbacken(47) mittels der Spannhülse(10) an die Nasen(6) andrückbar sind.

## Claims

1. A clamping device for the saw blade (4) of a hand-held sabre saw, which blade is movable parallel to its longitudinal axis (L) by a ram (2) driven in the sawing stroke in the housing of the sabre saw and has at its clamping end (5) two lugs (6), the clamping device having a centring sleeve (7), into which the clamping end (5) is insertable, and having an actuator for releasing the saw blade (4), wherein there is provided a clamping sleeve (10) mounted rotatably about the longitudinal axis (L) and arrayed to make an axial motion, by means of an oblique face (8,9) and a spring (11), in order to wedge the lugs of the clamping end (5) in the centring sleeve (7), and wherein by means of the actuator the clamping sleeve (10) is rotatable out of the clamping position into the release position against the force of the spring (11), the actuator consisting of an axially immobile switching sleeve (27) mounted pivotably in the housing (1) approximately about the longitudinal axis (L), the switching sleeve (27) projecting with a grip member (28) through a hole (29) in the housing (1), and the switching sleeve (27) forming a stop edge (31), which is at least as long in the axial direction as the sawing stroke (S), the stop edge (31) facing an actuating cam (32) of the clamping sleeve (10) and, upon actuation of the grip member (28), serving to rotate the clamping sleeve (10) out of its clamping position into the release position, characterised in that clamping jaws (16, 17) are guided in the centring sleeve (7) and clamp the end region (14) of the clamping end (5) of the saw blade (4) on both sides by means of inclined surfaces (22).

2. Clamping device according to claim 1, characterised in that the axis of rotation (D) of the switching sleeve (27) lies parallel to the longitudinal axis (L).

3. Clamping device according to claim 1 or 2, characterised in that a restoring spring (33) acts on the switching sleeve (7).

4. Clamping device according to claim 3, characterised in that the restoring spring (33) brings the switching sleeve (27) into a rest position in which its stop edge (31) is spaced from the actuating cam (32).

5. Clamping device according to one of the preceding claims, in particular in an oscillating sabre saw, characterised in that the switching sleeve (27) has an inner wall region (35) which is closer to the clamping sleeve (10) than the rest of the wall, and in that the inner wall region (35) presses the oscillatable clamping sleeve (10) to an end point of the oscillation stroke when the switching sleeve (27) is actuated.

6. Clamping device according to claim 5, characterised in that the wall of the switching sleeve (27) is elliptical in cross-section.

7. Clamping device according to one of the preceding claims 2 to 6, characterised in that the axis of rotation (D) lies between the longitudinal axis (L) and the inner wall region (35).

8. Clamping device according to one of the preceding claims, characterised in that the centring jaws (16,17) are pressed without clearance against the centring sleeve (7) by a spring (15).

9. Clamping device according to claim 8, characterised in that the centring jaws (16, 17) are guided in the centring sleeve (7) so as to be non-rotatable about the longitudinal axis (L).

10. Clamping device according to claim 8, characterised in that the centring jaws (16,17) consist of one piece, the connection being resilient and the centring jaws (16, 17) being so fitted as to be biased outwards.

11. Clamping device according to one of the preceding claims, characterised in that the spring acting between the clamping sleeve (10) and the centring sleeve (7) is a rotary spring (11).

12. Clamping device according to one of the preceding claims, characterised in that the clamping sleeve (10), as it moves, carries with it two centring jaws (16, 17) for the end region (14) of the insertion end (5).

13. Clamping device according to one of the preceding claims, characterised in that the clamping sleeve (10) has a receiving head (41) with a funnel-shaped recess (42) for receiving the wedge-shaped end region (14) of the insertion end (5).

14. Clamping device according to one of the preceding claims, characterised in that arms (45, 46) having clamping jaws (47) are pivotably mounted in the centring sleeve (7) and in that the clamping jaws (47) can be pressed against the lugs (6) by means of the clamping sleeve (10).

## Revendications

1. Dispositif de serrage pour la lame (4) d'une scie sauteuse mécanique guidée manuellement, lame qui est mobile parallèlement à son axe longitudinal (L) à l'aide d'un coulisseau (2), entraîné dans la course de la scie, dans le carter de la scie sauteuse mécanique et qui présente, à son extrémité de serrage (5), deux ergots (6), avec une douille de centrage (7) dans laquelle l'extrémité de serrage (5) vient s'emboîter, et avec un organe de réglage pour libérer la lame (4) de la scie, où est prévue une douille de serrage (10) logée de manière rotative autour de l'axe longitudinal (L), laquelle exécute, à l'aide d'une surface inclinée (8, 9) et d'un ressort (11), un déplacement axial calant les ergots de l'extrémité de serrage (5) dans la douille de centrage (7), en ce qu'au moyen de l'organe de serrage, la douille de serrage (10) peut tourner de la position de calage, à l'encontre de la force du ressort (11), dans la position de libération, en ce que l'organe de réglage est constitué par une douille de commande (27) logée immobile dans le sens axial et pivotante dans le carter (1) approximativement autour de l'axe longitudinal (L), en ce que la douille de commande (27) dépasse, par un organe de préhension (28), d'un perçage (29) dans le carter (1), et en ce que la douille de commande (27) forme un bord de butée (31) qui est au moins aussi long dans le sens axial, que la course (S) de la scie, le bord de butée (31) étant opposé à une came d'actionnement (32) de la douille de serrage (10), ce qui amène à faire tourner la douille de serrage (10), depuis sa position de calage, dans sa position de libération, à l'actionnement de l'organe de préhension (28),
caractérisé en ce que sont guidées dans la douille de centrage (7) des mâchoires de centrage (16, 17) qui, au moyen de surfaces inclinées (22), serrent des deux côtés la zone d'extrémité (14) de l'extrémité de serrage (5) de la lame de scie (4).

2. Dispositif de serrage selon la revendication 1, caractérisé en ce que l'axe de rotation (D) de la douille de commande (27) est parallèle à l'axe longitudinal (L).

3. Dispositif de serrage selon la revendication 1 ou 2, caractérisé en ce que le ressort de rappel (33) s'applique contre la douille de commande (27).

4. Dispositif de serrage selon la revendication 3, caractérisé en ce que le ressort de rappel (33) amène la douille de commande (27) dans une position de repos dans laquelle son bord de butée (31) est à distance de la came d'actionnement (32).

5. Dispositif de serrage selon l'une des revendications précédentes, en particulier pour une scie sauteuse pendulaire, caractérisé en ce que la douille de commande (27) présente une zone de paroi interne (35) qui est plus près de la douille de serrage (10) que le reste de la paroi, et en ce que la zone de paroi interne (35), à l'actionnement de la douille de commande (27), presse la douille de serrage pendulaire (10) contre un point d'extrémité de l'amplitude pendulaire.

6. Dispositif de serrage selon la revendication 5, caractérisé en ce que la paroi de la douille de commande (27) a une section transversale ovale.

7. Dispositif de serrage selon l'une des revendications précédentes 2 à 6, caractérisé en ce que l'axe de rotation (D) se trouve entre l'axe longitudinal (L) et la zone de paroi interne (35).

8. Dispositif de serrage selon l'une des revendications précédentes, caractérisé en ce que les deux mâchoires de centrage (16, 17) sont poussées par un ressort (15) sans jeu contre la douille de centrage (7).

9. Dispositif de serrage selon la revendication 8, caractérisé en ce que les mâchoires de centrage (16, 17) sont guidées de manière non rotative autour de l'axe longitudinal (L) dans la douille de centrage (7).

10. Dispositif de serrage selon la revendication 8, caractérisé en ce que les mâchoires de centrage (16, 17) sont faites d'une seule pièce, la liaison étant élastique et les mâchoires de centrage (16, 17) étant insérées par pré-tension vers l'extérieur.

11. Dispositif de serrage selon l'une des revendications précédentes, caractérisé en ce que le ressort agissant entre la douille de serrage (10) et la douille de centrage (7) est un ressort de torsion (11).

12. Dispositif de serrage selon l'une des revendications précédentes, caractérisé en ce que la douille de serrage (10) est accompagnée axialement, dans son déplacement par deux mâchoires de centrage (16, 17) pour la zone finale (14) de l'extrémité de serrage (5).

13. Dispositif de serrage selon l'une des revendications précédentes, caractérisé en ce que le douille de serrage (10) présente une tête de logement (41) avec une cavité (42) en forme d'entonnoir pour le logement de la zone finale cunéiforme (14) de l'extrémité de serrage (5).

14. Dispositif de serrage selon l'une des revendications précédentes, caractérise en ce que des bras (45, 46) présentant des mâchoires de serrage (47) sont logés dans la douille de centrage (7) de manière pivotante et en ce que les mâchoires de serrage (47) peuvent être pressées, au moyen de la douille de serrage (10), contre les ergots (6).
